# EUROPÄISCHE PATENTANMELDUNG

(11) **EP 0 677 759 A1**
(43) Veröffentlichungstag der Anmeldung: **18.10.1995**
(21) Anmeldenummer: 95104469.2
(22) Anmeldetag: 27.03.1995
(51) Int. Cl.: G02B 6/44

(54) **Lichtwellenleiterkabel mit zug- und stauchfesten Bündeladern**

(30) Priorität: 13.04.1994 DE 4412374
(71) Anmelder: Alcatel Kabel AG & Co., D-30179 Hannover (DE)
(72) Erfinder: Hög, Georg, Dipl.-Ing., D-41065 Mönchengladbach (DE); Nothofer, Klaus, Dipl.-Ing., D-40699 Erkrath (DE); Zamzow, Peter, Dipl.-Ing., D-44795 Bochum (DE); Diehl, Bernhard, Dipl.-Ing., D-41238 Mönchengladbach (DE)
(74) Vertreter: Mende, Eberhard, Dipl.-Ing.

(57) **Zusammenfassung**

Bei einem Lichtwellenleiterkabel mit einer Anzahl verseilter oder parallel geführter Bündeladern (1), die jeweils einen oder mehrere Lichtwellenleiter (3) bzw. ein oder mehrere Lichtwellenleiter-Bändchen enthalten, sind die die Zugentlastung und/oder den Stauchschutz des Kabels bestimmenden Elemente (5) ganz oder zumindest überwiegend Teil der Bündeladern (1).

## Beschreibung

Die vorliegende Anmeldung betrifft ein Lichtwellenleiterkabel mit einer Anzahl verseilter oder parallel geführter Bündeladern, die jeweils einen oder mehrere Lichtwellenleiter bzw. ein oder mehrere Lichtwellenleiter-Bändchen enthalten.

Kabel der gattungsgemäßen Art sind hinlänglich bekannt, jedoch läßt die mechanische Stabilität der Bündeladern und des Kabels immer noch zu wünschen übrig, die aber gewährleistet sein muß, damit bei der Herstellung, bei der Verlegung und im Betrieb äußere mechanische Kräfte von den Lichtwellenleitern ferngehalten werden und damit die geforderten Übertragungseigenschaften sichergestellt sind.

Der Erfindung liegt daher die Aufgabe zugrunde, eine Möglichkeit zu finden, die mechanische Stabilität bei hinreichender Flexibilität zu gewährleisten, die Übertragungseigenschaften auch bei hoher mechanischer Belastung sicherzustellen sowie die Anzahl der Kabelaufbaukomponenten zu minimieren.

Gelöst wird diese Aufgabe gemäß der Erfindung dadurch, daß die die Zugentlastung des Kabels bestimmenden Elemente ganz oder zumindest überwiegend Teil der Bündeladern sind. Desgleichen ist vorgesehen, daß zum gleichen Zweck die den Stauchschutz des Kabels bestimmenden Elemente ebenfalls ganz oder zumindest überwiegend Teil der Bündeladern sind. Diese beiden erfindungsgemäßen Varianten ermöglichen eine gleichmäßige Verteilung der kraftaufnehmenden Elemente über den gesamten Kabelquerschnitt, die gute mechanische Stabilität insbesondere auch in Anwendung auf ein Aufteilkabel für die einzelnen Kabelelemente, ist sichergestellt. Die Anzahl der Aufbaukomponenten des Kabels wird so verringert, gewünschte geringe Gesamtquerschnitte können beibehalten werden.

Vorteilhaft wird man in Weiterführung der Erfindung so vorgehen, daß Teil der Bündeladern gleichzeitig zug- und stauchfeste Elemente sind. Diese können auch vorteilhaft als Teil der Bündeladern eine Einheit bilden. Wird, wie weiterhin vorgesehen, diese Einheit aus zug- und stauchfesten Elemente durch einen gleichzeitig zug- und stauchfesten Kunststoff sichergestellt, dann ergeben sich durch die Erfindung metallfreie Lichtwellenleiterkabel einfachen Aufbaues, mit einer geringen Anzahl Aufbauelementen hinreichender Flexibilität bei hoher Betriebssicherheit, insbesondere mit Rücksicht auf die im Innern des Kabels geführten Lichtwellenleiter.

In Durchführung der Erfindung können die die Zugentlastung des Kabels bestimmenden Elemente und die für den Stauchschutz vorgesehenen Elemente als gesonderte Elemente Teil der Bündelader sein, wesentlich ist, daß diese Elemente mit der Bündelader selbst derart verbunden sind, daß sie mit dieser eine Einheit bilden, die Bündeladern selbst also einschließlich der die Zugentlastung und den Stauchschutz bildenden Elemente verseilt und weiter verarbeitet werden können. Die die Zugentlastung sowie den Stauchschutz bildenden Elemente werden die Bündelader daher in konzentrischer Form umgeben. So kann man beispielsweise als Zugentlastungselemente glasfaserverstärkte Bänder verwenden, die über Stäbe oder Profile aus glasfaserverstärktem Kunststoff gewickelt und durch einen Klebeverbund zu einer Einheit zusammengefaßt werden. Dieser Verbund umgibt dann die Bündelader in Form einer konzentrischen Schicht. Als besonders vorteilhaft hat es sich jedoch in Durchführung der Erfindung erwiesen, wenn für die Zugentlastung und den Stauchschutz ein glasfaserverstärkter Kunststoff verwendet wird. Dies ermöglicht z. B. ein Laminat aus einem glasfaserverstärkten Kunststoff aber auch mit besonderem Vorteil eine Schicht aus diesem Material, das dann durch sogenannte Pultrusion auf die Bündelader unmittelbar aufgebracht werden kann.

Da wie bereits ausgeführt, das Wesen der Erfindung darin zu sehen ist, daß die die Zugentlastung und die den Stauchschutz des Kabels bestimmenden Elemente gleichmäßig im Kabelaufbau verteilt sind, ist in Durchführung der Erfindung weiterhin vorgesehen, daß die konzentrische Schicht mit der die Sichtwellenleiter bzw. Lichtwellenleiter-Bändchen umschließenden Hülle verklebt oder mit Haftsitz auf diese aufgebracht ist. Wird für die konzentrische Schicht ein glasfaserverstärkter Kunststoff verwendet, der durch Pultrusion verarbeitbar ist, dann ist es sogar möglich und mitunter besonders vorteilhaft, auf die die Lichtwellenleiter umschließende Hülle zu verzichten und statt dessen die konzentrische Schicht gleichzeitig als Hülle für die Lichtwellenleiter bzw. die Lichtwellenleiter-Bändchen zu verwenden.

Die Bündeladern selbst können miteinander verseilt oder auch parallel laufend gebündelt oder in Form eines Flachkabels mit einem gemeinsamen Außenmantel parallel nebeneinander liegend geführt sein. Eine andere vorteilhafte Möglichkeit ist die, die Bündeladern um einen als Kernelement dienenden Einlauf zu verseilen. Dieser zentraler Einlauf kann seinerseits aus einer zentralen Bändchenader bestehen, wobei diese wiederum die Zugentlastung und den Stauchschutz bildende Elemente aufweist, der zentrale Einlauf kann aber auch aus einer Bündelader bestehen, die ebenfalls wiederum mit einer Zugentlastung und einem Stauchschutz entsprechend der Erfindung ausgebildet ist. Die Bündeladern selbst können zudem gefüllt sein, um auch die Längswasserdichtigkeit innerhalb des Kabelverbandes sicherzustellen, dieser Forderung kommt man in Durchführung der Erfindung weiter entgegen, wenn eine zusätzliche Füllung zwischen der aus den Bündelandern gebildeten Seele und dem umgebenden Mantel des Kabels vorgesehen ist.

Die Bündeladern können mit wechselnder Schlagrichtung, entsprechend dem sogenannten SZ-Verseilverfahren, verseilt sein, wobei es in Durchführung der Erfindung zweckmäßig ist, zur Fixierung des Verseilverbandes Abbindungselemente aus einem Glasfasergewebeband zu verwenden. Dieses Glasfasergewebeband umgibt den Umseilverband zweckmäßig wendelförmig, vorteilhaft wählt man einen Kreuzschlag beim Aufbringen dieser Glasfasergewebebänder, um die Kabelseele bzw. das Kabel insgesamt frei von Torsionsspannungen zu halten.

Die erfindungsgemäß ausgebildeten Bündeladern können im Verseilverband auch wendelförmig um ein zentrales Kernelement verseilt sein, hierbei hat es sich oft als zweckmäßig erwiesen, die Bündeladern im Verseilverband in Abständen durch eine Bewicklung zu fixieren, die ebenfalls aus einem Glasfasergewebeband, aber auch aus anderen zugfesten Elemente bestehen.

Lichtwellenleiterkabel gemäß der Erfindung sind für beliebige Zwecke einsetzbar, sollen sie jedoch als sogennante Weitspannluftkabel eingesetzt werden, dann kann es mitunter vorteilhaft sein, zusätzlich zu den den einzelnen Bündeladern zugeordneten zug- und stauchfesten Elementen unter oder im Außenmantel des Kabels gesonderte Zugentlastungselemente vorzusehen. Auch diese Zugentlastungselemente werden vorteilhaft im Kreuzschlag zur Vermeidung von Torsionsspannungen im Kabel aufgebracht.

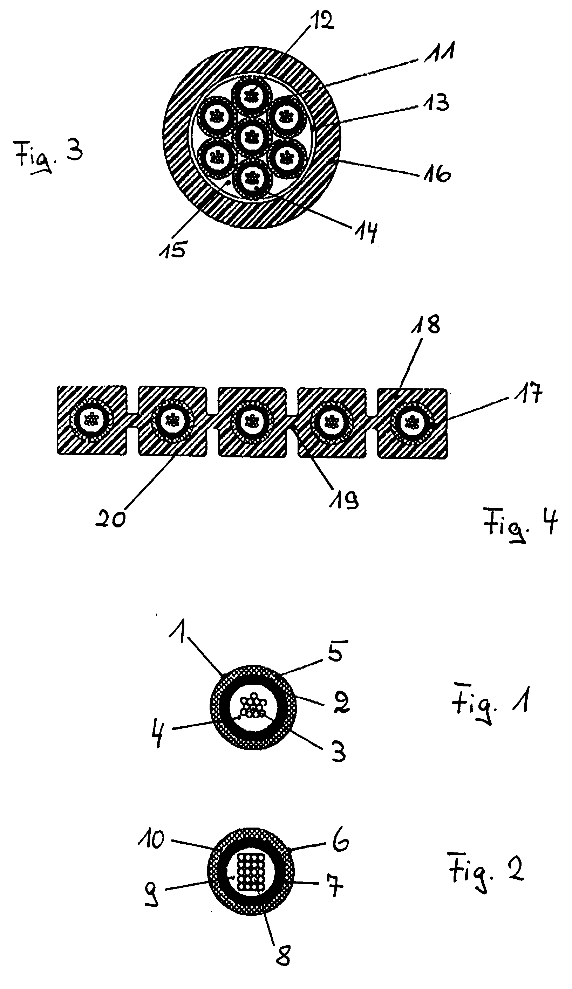

Die Erfindung sei anhand der in den Fig. 1 bis 4 dargestellten Ausführungsbeispiele näher erläutert.

Hierbei zeigt die Fig. 3 ein Lichtwellenleiterkabel mit verseilten Bündeladern entsprechend den Fig. 1 und 2, während in der Fig. 4 ein sogenanntes Flachkabel dargestellt ist, dessen Bündeladern entsprechend den Fig. 1 oder 2 aufgebaut sind.

Wie bereits ausgeführt, ist für die Erfindung wesentlich, daß die die Zugentlastung des Kabels bestimmenden Elemente ebenso wie die den Stauchschutz der Lichtwellenleiter übernehmenden Elemente Teil der Bündeladern sind. Die Fig. 1 zeigt entsprechend eine zugfeste Bündelader 1, die aus einer Kunststoffhülle 2 besteht, innerhalb der die Lichtwellenleiter 3 angeordnet sind. Der Raum 4 im Innern der Kunststoffhülle 2 kann mit einer dichtenden Masse gefüllt sein. Zur Zugentlastung des Kabels, gleichzeitig aber auch als Stauchschutz für die innerhalb der Kunststoffhülle 2 angeordneten Lichtwellenleiter 3 ist die konzentrische Schicht 5 vorgesehen, die mit der Kunststoffhülle 2 verklebt ist oder auf diese mit Haftsitz aufgebracht werden kann. Letzteres gilt insbesondere für die Fälle, wo diese konzentrische Schicht 5 aus einem glasfaserverstärkten Kunststoff besteht, der durch Pultrusion auf die Kunststoffhülle 2 aufgebracht ist. In Durchführung der Erfindung kann man abweichend hiervon aber auch so vorgehen, daß statt der konzentrischen Schicht 5, die für eine Zugentlastung und gleichzeitig für den Stauchschutz sorgt, in Kombination mit der Kunststoffhülle 2 die konzentrische Schicht 5 allein verwendet, so daß sie gleichzeitig als Hülle für die Lichtwellenleiter 3 mit entsprechender Zugentlastung und angepaßtem Stauchschutz dient.

Die in der Fig. 2 dargestellte Bündelader 6 entspricht in ihrem Aufbau im Grunde der Bündelader 1 nach der Fig. 1. Auch hier ist eine Kunststoffhülle 7 vorgesehen, innerhalb der die Lichtwellenleiter angeordnet sind, im vorliegenden Fall jedoch in Form von Lichtwellenleiterbändchen 8, die zu einem Stapel zusammengefaßt sind. Der verbleibende Raum 9 innerhalb der Kunststoffhülle 7 kann wiederum mit einer dichtenden Masse gefüllt sein, die in die Bündelader 6 integrierte Zugentlastung und der ebenfalls integrierte Stauchschutz ist erreicht durch die konzentrische Schicht 10, die aus einzelnen Elementen, die teils der Zugentlastung, teils dem Stauchschutz dienen, zusammengesetzt sein kann, in besonders vorteilhafter Form jedoch aus einem glasfaserverstärkten Kunststoff besteht, der beide Forderungen gleichzeitig erfüllt.

Eine Verwendungsmöglichkeit der in den Fig. 1 und 2 dargestellten Bündeladern zeigt die Fig. 3 am Beispiel eines Lichtwellenleiterkabels mit sieben Bündeladern 11. Teil dieser Bündeladern 11 sind wiederum zugfeste und stauchsichere Elemente. Im Ausführungsbeispiel enthalten die Bündeladern 11 eine Anzahl von Lichtwellenleitern 12, die selbstverständlich auch durch Bändchen entsprechend dem Ausführungsbeispiel nach der Fig. 2 ersetzt werden können. Die Bündeladern 11 können miteinander in Form einer Wendel verseilt, sie können parallel im Bündel liegend geführt, aber auch dadurch zu einer Seele zusammengefaßt sein, daß die Bündeladern mit wechselnder Schlagrichtung verseilt sind. Ein solches Verfahren ist unter dem Begriff SZ-Verseilung allgemein bekannt ist. Um die verseilten oder gebündelten Bündeladern 11 sicher zusammenzuhalten, ist eine Bewicklung 13 vorgesehen, diese kann beispielsweise aus einem zugfesten Glasfasergewebeband bestehen und die verseilten oder gebündelten Bündeladern 11 wendelförmig umschließen. Die Bewicklung 13 kann auch im Kreuzschlag aufgebracht sein, um die Entstehung von Torsionsspannungen im Kabel selbst zu verhindern, in einzelnen Fällen kann es auch ausreichend sein, die verseilten oder gebündelten Bündeladern 11 lediglich in Abständen durch eine Bebänderung zusammenzufassen.

Der von den Lichtwellenleitern 12 nicht beanspruchte Raum 14 kann wiederum mit einer dichtenden Masse gefüllt sein, gleiches gilt auch für die Zwickelräume 15 des Verseilverbandes, die mit das Kabel in Längsrichtung abdichtenden Materialien gefüllt sein können. Der die Kabelseele umschließende Außenmantel 16 besteht aus einem geeigneten, beispielsweise abriebfesten Kunststoff, der gegebenenfalls auch flammwidrig eingestellt sein kann.

Im Ausführungsbeispiel nach der Fig. 3 sind sieben Bündeladern zur Kabelseele zusammengefaßt, vorteilhaft kann es mitunter auch sein, statt der im Kern dieser Seele befindlichen Bündelader einen beliebigen Kernstrang vorzusehen, beispielsweise ebenfalls aus einem zugfesten und/oder stauchfesten Material, oder auch eine beliebig ausgebildete Ader mit Lichtwellenleitern oder Lichtwellenleiter-Bändchen.

In der Fig. 4 schließlich ist ein sogenanntes Flachkabel dargestellt, hier sind die parallel verlaufenden Bündeladern 17, die entsprechend den Bündeladern 1 der Fig. 1 ausgebildet sind, aber auch entsprechend nach dem Ausführungsbeispiel der Fig. 2 Lichtwellenleiter-Bändchen enthalten können, von einem gemeinsamen Mantel 18 umschlossen, der im Bereich zwischen jeweils zwei Bündeladern 17 Stege 19 bildet, die ein Auftrennen des Flachkabels 20 in Einzelkabel ermöglichen. Auch hier macht sich wieder der gemäß der Erfindung erzielte Vorteil bemerkbar, daß durch die Zuordnung der zugfesten und/oder stauchfesten Elemente zu den einzelnen Bündeladern diese problemlos auch nach der Herausführung aus dem Verseilverband oder aus dem Flachkabel als selbständige Kabelelemente weitergeführt werden können, ohne daß die-mitgeführten Lichtwellenleiter durch äußere mechanische Beanspruchungen Schaden erleiden und damit die geforderten Übertragungseigenschaften in Frage gestellt werden. Dieser Vorteil ergibt sich insbesondere beim Einsatz der erfindungsgemäßen Kabel als Verteilerkabel im Ortsnetzbereich, wo aus dem weitergeführten Kabel an beliebigen Stellen Bündeladern herausgeführt und mit dem jeweiligen Teilnehmer verbunden werden.

Die Erfindung sichert mithin, wenn das gesamte Kabel betrachtet wird, eine gleichmäßige Verteilung der kraftaufnehmenden Elemente über den gesamten Kabelquerschnitt, die gute mechanische Stabilität kommt dann noch zusätzlich bei sogenannten Aufteilkabeln, nämlich bei der Aufteilung des Kabels in Einzelelemente zum Tragen. Werden für die Zugentlastung und/oder den Stauchschutz glasfaserverstärkte Kunststoffe verwendet, dann sind solche Lichtwellenleiterkabel metallfrei, sie bieten aber dennoch die geforderte hohe mechanische Stabilität der Bündeladern sowie des Kabels.

## Patentansprüche

1. Lichtwellenleiterkabel mit einer Anzahl verseilter oder parallel geführter Bündeladern, die jeweils einen oder mehrere Lichtwellenleiter bzw. ein oder mehrere Lichtwellenleiter-Bändchen enthalten, dadurch gekennzeichnet, daß die die Zugentlastung des Kabels bestimmenden Elemente ganz oder zumindest überwiegend Teil der Bündeladern sind.

2. Lichtwellenleiterkabel mit einer Anzahl verseilter oder parallel geführter Bündeladern, die jeweils einen oder mehrere Lichtwellenleiter bzw. ein oder mehrere Lichtwellenleiter-Bändchen enthalten, dadurch gekennzeichnet, daß die den Stauchschutz des Kabels bestimmenden Elemente ganz oder zumindest überwiegend Teil der Bündeladern sind.

3. Lichtwellenleiterkabel nach Anspruch 1 oder 2, dadurch gekennzeichnet, daß Teil der Bündeladern gleichzeitig zug- und stauchfeste Elemente sind.

4. Lichtwellenleiterkabel nach Anspruch 3, dadurch gekennzeichnet, daß die zug- und stauchfesten Elemente als Teil der Bündelader eine Einheit bilden.

5. Lichtwellenleiterkabel nach Anspruch 4, dadurch gekennzeichnet, daß die Einheit durch einen gleichzeitig zug- und stauchfesten Kunststoff erreicht ist.

6. Lichtwellenleiterkabel nach Anspruch 1 oder einem der folgenden, dadurch gekennzeichnet, daß die Zugentlastung sowie der Stauchschutz die Bündelader in Form einer konzentrischen Schicht umgibt.

7. Lichtwellenleiterkabel nach Anspruch 1 oder einem der folgenden, dadurch gekennzeichnet, daß für die Zugentlastung und den Stauchschutz ein glasfaserverstärkter Kunststoff dient.

8. Lichtwellenleiterkabel nach Anspruch 6 oder 7, dadurch gekennzeichnet, daß die konzentrische Schicht mit der die Lichtwellenleiter/-Bändchen umschließenden Hülle verklebt oder mit Haftsitz auf diese aufgebracht ist.

9. Lichtwellenleiterkabel nach Anspruch 6 oder 7 oder einem der folgenden, dadurch gekennzeichnet, daß die konzentrische Schicht gleichzeitig selbst Hülle für die Lichtwellenleiter/-Bändchen ist.

10. Lichtwellenleiterkabel nach Anspruch 1 oder einem der folgenden, dadurch gekennzeichnet, daß die Bündeladern um einen als Kernelement dienenden Einlauf verseilt sind.

11. Lichtwellenleiterkabel nach Anspruch 10, dadurch gekennzeichnet, daß der zentrale Einlauf aus einer zentralen Bändchenader besteht.

12. Lichtwellenleiterkabel nach Anspruch 11, dadurch gekennzeichnet, daß die zentrale Bändchenader die Zugentlastung und den Stauchschutz bildende Elemente aufweist.

13. Lichtwellenleiterkabel nach Anspruch 10, dadurch gekennzeichnet, daß der zentrale Einlauf aus einer Bündelader besteht.

14. Lichtwellenleiterkabel nach Anspruch 13, dadurch gekennzeichnet, daß die zentrale Bündelader ebenfalls mit einer Zugentlastung und einem Stauchschutz ausgestattet ist.

15. Lichtwellenleiterkabel nach Anspruch 1 der einem der folgenden, dadurch gekennzeichnet, daß die Bündeladern gefüllt sind.

16. Lichtwellenleiterkabel nach Anspruch 1 oder einem der folgenden,dadurch gekennzeichnet, daß die Bündeladern mit wechselnder Schlagrichtung (SZ) verseilt sind und zur Fixierung des Verseilverbandes Abbindungselemente aus einem Glasfasergewebeband dienen.

17. Lichtwellenleiterkabel nach Anspruch 16, dadurch gekennzeichnet, daß das Glasfasergewebeband den Verseilverband wendelförmig umgibt.

18. Lichtwellenleiterkabel nach Anspruch 16 und 17, dadurch gekennzeichnet, daß die Glasfasergewebebänder im Kreuzschlag aufgebracht sind.

19. Lichtwellenleiterkabel nach Anspruch 1 oder einem der folgenden, dadurch gekennzeichnet, daß die Bündeladern im Verseilverband wendelförmig gegebenenfalls um ein zentrales Kernelement verseilt sind.

20. Lichtwellenleiterkabel nach Anspruch 19, dadurch gekennzeichnet, daß die Bündeladern im Verseilverband in Abständen durch eine Bewicklung fixiert sind.

21. Lichtwellenleiterkabel nach Anspruch 20, dadurch gekennzeichnet, daß die Bewicklung aus einem Glasfasergewebeband besteht.

22. Verwendung eines Lichtwellenleiterkabels nach Anspruch 1 oder einem der folgenden als Weitspannluftkabel, dadurch gekennzeichnet, daß zusätzlich zu den die Zugentlastung und/oder den Stauchschutz bildenden Elemente der Bündeladern unter oder im Außenmantel Zugentlastungselemente angeordnet sind.

23. Lichtwellenleiterkabel nach Anspruch 22, dadurch gekennzeichnet, daß die Zugentlastungselemente im Kreuzschlag aufgebracht sind.

24. Lichtwellenleiterkabel nach Anspruch 1 oder einem der folgenden, gekennzeichnet durch gefüllte Bündel sowie eine zusätzliche Füllung zwischen Seele und Mantel des Kabels.
